# EUROPEAN PATENT APPLICATION

(11) **EP 1 422 001 A1**
(43) Date of publication of application: **26.05.2004**
(21) Application number: 02079925.0
(22) Date of filing: 22.11.2002
(51) Int. Cl.: B09C 1/10, A62D 3/00

(54) **Method for bioremediation using composition comprising lactic acid ester and fatty acid**

(71) Applicant: PURAC Biochem BV, 4206 AC Gorinchem (NL)
(72) Inventor: Gijsen, Rupertus Mattias Rafael, 4007 ZP Tiel (NL); Van der Linden, Johannes Theodorus, 2421 TZ Nieuwkoop (NL)
(74) Representative: Beetz, Tom

(57) **Abstract**

The invention pertains to a method for bio-remediation of an environment that is contaminated with a halogen-containing compound comprising adding to the environment an amount of a composition comprising a) 10 to 90 wt.% of a C8-C22 fatty acid, a salt or a C1-C8 ester thereof, or a mixture thereof, and b) 10 to 90 wt.% of a C1-C8 ester of lactic acid, and reductively dehalogenating the halogen-containing compound in the environment to innocuous compounds.

## Description

The invention pertains to a method for bioremediation of an environment that is contaminated with a halogen-containing compound.

Methods for enhancing bioremediation of an environment that is contaminated with halogen-containing compounds are known in the art. In Dan W. Waddill, Platform abstracts of the Third International Conference on Remediation of Chlorinated and Recalcitrant Compounds, May 20-23, 2002/section B7 it was disclosed that surface injection of vegetal oil has emerged as a technology to provide a low cost, long lasting source of electron donor for enhanced biodegradation of halogenated compounds, particularly of chlorinated compounds. The dissolution rate of the oil determines the concentration of electron donor available for aquifier microbes and the time that the oil remains in the subsurface. Since the dissolution time of oils is generally long, a good control of the bioremediation can in principle be obtained, the more since oils are slowly releasing hydrogen compounds. However, oils also have serious drawbacks, such as high viscosity and low water-solubility. Thus oils are usually difficult to pump into the ground, which is a serious problem because the environmental contaminants are usually to be found in the groundwater. It is therefore an object of the invention to provide an improvement of the efficacy of vegetal oils, more generally of fatty acids, salts and esters thereof, in the bioremediation methods for the reductive dehalogenation of halogenated compounds.

To this end the invention relates to a method for bioremediation of an environment that is contaminated with a halogen-containing compound comprising adding to the environment an amount of a composition comprising a) 10 to 90 wt.% of a C8-C22 fatty acid, a salt or a C1-C8 ester thereof, or a mixture thereof (hereinafter generically called "fatty acid"), and b) 10 to 90 wt.% of a C1-C8 ester of lactic acid (hereinafter generically called "lactic acid ester"), and reductively dehalogenating the halogen-containing compound in the environment to innocuous compounds.

The use of lactic acid, in the absence of a fatty acid, in bioremediation processes is known in the art. See, for instance US 2002/0020665 A1, disclosing a method for enhancing bioremediation of groundwater by using salts of lactic acid, lactic acid ethyl ester, or mixtures thereof. The drawback of the use of low-molecular lactic acid or derivatives thereof, or other similar acids such as acetic acid and propionic acid, is that they release almost instantly in the area and are ceased within a relatively short period, and they easily flow away from the contaminated area. Although esters of lactic acid delay the release of free lactic acid in the soil, the rate is still higher than that of other slow-releasing substrates, and therefore no optimal reductive dehalogenation of contaminants is obtained and excessive amounts of lactate esters are required, which are largely wasted in the environment. In WO 9924367 a solution to this problem was proposed by using a multifunctional alcohol ester of a poly(hydroxyacid)that acts as a precursor for lactic acid and that slowly releases free lactate. This method, however, requires expensive chemical synthesis, adding unfavorably to the costs of bioremediation.

The present invention has to its object to solve the problems of viscous oils that in principle are more suitable for the slow release of reductive hydrogen, and additionally also to solve the inherent problems of the fast release and flowing away in the soil of lactic acid.

It was found that addition of lactic acid ester to oils (i.e. fatty acids) lowers the viscosity thereof and increases the water solubility of the fatty acid. The oils therefore can more easily be pumped into the environment and do better penetrate into the soil. Further, the lower viscosity and the increased water solubility lead to a better spread of the oil in the soil. The lactic acid ester thus acts as a carrier material for transporting the fatty acid. The invention therefore works twofold: it enhances the penetration and the flow ability of the oil to acceptable values, whereas at the same time the penetration and the flow ability of the lactic acid ester as such is decreased to the same acceptable values.

The invention has further a number of other advantages. In many instances it is advantageous to use a fast and a slow hydrogen-releasing compound. The lactic acid ester is a relatively fast releasing compound that accounts for a fast onset of the bioremediation process, whereas the fatty acid is a relatively slow releasing compound that accounts for a long acting bioremediation process. The lactic acid ester carrier transports the oil into the soil, acts as a hydrogen-releasing compound for a few weeks, after which time the lactic acid ester has completely been decomposed and the fatty acid, which is then fixed in the soil, continues to act as a hydrogen-releasing compound for a much longer period. Finally, the composition of the present invention is a cost-effective material since no lactic acid ester is wasted and only a minor quantity of this material is necessary, whereas the fatty acid penetrates and spreads in the soil.

In another embodiment of the invention 0-25 wt.% of a surfactant is added to further enhance the miscibility of the fatty acid and water, and therefore the spread ability of the fatty acid.

In a preferred embodiment the composition comprises a) 25 to 75 wt.% of a C8-C22 fatty acid, a salt or a C1-C8 ester thereof, or a mixture thereof, and b) 25 to 75 wt.% of a C1-C8 ester of lactic acid.

The surfactant may be any common surfactant including anionic, non-ionic, amphoteric and zwitterionic surfactants. Examples are branched and linear alcohol ethoxylates (C8-C22 fatty alcohol ethoxylates), such as C12-EO2 Laureth-2 (Dehydol® LS2, Marlipal® 24/20), C12-EO5, Laureth-5 (Marlipal® 24/50), C12-EO10, Laureth-10 (Marlipal® 24/100, Dehydol® 100), C16-C18 EO2, cetyl/stearyl eth-2 (Rhodasurf® A-2), C16-C18 EO2, cetyl/oleyl eth-2 (Eumulgin® 3370V), C18-EO2, Oleth-2 (Genapol® O-020), C18-EO10, Oleth-2 (Genapol® O-100); (ethoxylated) mono- and dialkyl phosphate esters, such as oleyl ether phosphate, EO 3,5, (Rhodafac® PA/35), lauryl ether phosphate, EO7 (Akypomine® MW 05); alkyl (ether) sulfates and sulfonates, such as sodium lauryl sulfate (Texapon® LS), sodium lauryl ether sulfate (Texapon® NSO), and sodium petroleum sulfonate (Petronate® HL); branched and linear alcohol ethoxylates carboxylic acids, such as oleyl ether (EO10) carboxylic acid (Akypo® RO 90); betaines such as cocoaminopropyl betaine (Dehyton® K); amides such as cocamide MEA (Comperlan® 100); alkyl polysaccharides such as alkyl polyglycoside(Glucopon® 220); polysorbates such as polysorbate 20 (Tween® 20); Quaternary amonium salts such as cetyl trimethyl ammonium chloride (Dehyquart A CA); and the like. Further suitable surfactants are disclosed in WO 02/00084, pages 12-25, which is incorporated by reference.

Preferred surfactants are (ethoxylated) mono- and dialkyl phosphate esters, such as polyoxyethylene oleyl ether phosphate. The addition of a surfactant to a composition comprising a C1-C8 ester of a C8-C22 fatty is preferred. The addition of a surfactant typically makes the composition more effective in spreading in the environment.

The "fatty acid" can be any fatty acid of any source including vegetal, animal, fish and mineral sources, such as soy been fatty acid, rape seed fatty acid, coconut fatty acid, palm kernal fatty acid, tall fatty acid, tallow fatty acid, corn oil, mustard oil, niger seed oil, olive oil, peanut oil, poppy seed oil, safflower oil, sesame oil, sunflower seed oil, wheat germ oil, and a mixture thereof. Preferably, the fatty acids are selected from soy been fatty acid, rapeseed fatty acid, coconut fatty acid, palm kernal fatty acid, tallow fatty acid, and a mixture thereof. C1-C8 esters and salts of these fatty acids can equally well be used. C1-C4 esters of these fatty acids are preferred fatty acid esters because of their favorable viscosity properties. Saturated fatty acids of vegetal source are preferred.

The "lactic acid ester" can be methyl, ethyl, propyl, isopropyl, butyl, isobutyl, sec-butyl, and tert-butyl, pentyl, hexyl, octyl, 2-ethylhexyl ester of lactic acid and the like. Mixtures thereof can also be used. Preferred are C1-C4 alkyl esters, which have the best water miscibility properties. Most preferred is the ethyl ester of lactic acid.

The method according to the invention targets at the bioremediation of halogenated compounds, particularly of chlorinated compounds such as perchloroethylene (tetrachloroethylene)(PCE), trichloroethylene (TCE), dichloroethylene (DCE), vinyl chloride (VC), 1,1,1-trichloroethane (TCA), carbon tetrachloride, dichloromethane, and the like.

It is noted that the compositions of the invention as such are described in WO 0118162 and WO 0174984 for use as household and industrial surface cleaning agents, particularly for cleaning surfaces from ink and paints.

Halo-respiring microbes are usually present in the environment (soil or groundwater), but such microbes can also be exogenously supplied if necessary. Preferably, the microbes are bacteria, such as *Dehalococcoides ethenogenes* strain 195, The Pinellas culture, and the like.

The invention is illustrated by the following examples that are not limitative and can be varied in a number of ways within the scope of the claims.

### Examples

Ethyl lactate (Purasolv® EL) was mixed in different ratios with cis-13-docosenoic acid (erucic acid) or methylated soybean fatty acid (Soygold® 1000), and optionally with polyoxyethylene oleyl ether phosphate (Rhodafac® PA/35). The stability was measured for 24 hours at room temperature, and the water miscibility of these mixtures were measured in a 150 ml glass beaker with 90 ml of demi water and 10 ml of the mixture. The viscosity was measured with a Brookfield DV-III rheology meter and a spindle number 18.

The results obtained are shown in Table I:

**Table I**

| ethyl lactate (%) | Soygold® 1000 (%) | erucic acid (%) | Rodafac® PA/35 (%) | stability (24 h, r.t.) | water miscibility* |
|---|---|---|---|---|---|
| 100 | 0 | - | - | stable | 5 |
| 75 | 25 | - | - | stable | 3 |
| 50 | 50 | - | - | stable | 2 |
| 25 | 75 | - | - | stable | 1-2 |
| 0 | 100 | - | - | stable | 1 |
| 25 | 75 | - | 2.25 | stable | 4 |
| 25 | - | 75 | - | solid | 1-2 |
| 50 | - | 50 | - | solid | n.d. |
| 0 | - | 100 | - | solid | 1 |
| 25 | - | 75 | 2.25 | solid | 1-2 |

| | | | | | |
|---|---|---|---|---|---|
| *1=not water miscible, 2= very slightly water miscible, 3=slightly water miscible, 4=reasonably water miscible, 5=good water miscible, n.d.=not determined | | | | | |

The ethyl lactate further decreases the viscosity of the fatty acids as shown in Table II

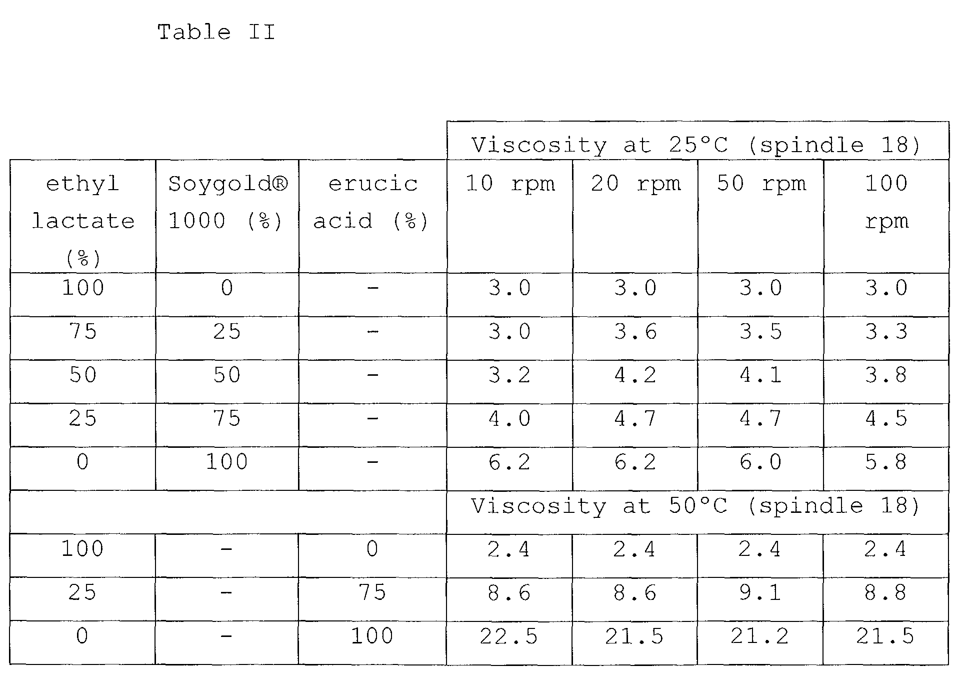

It can be concluded that ethyl lactate increases the water miscibility of the fatty acid. Surfactants further increase the miscibility. Ethyl lactate further lowers the viscosity of the fatty acid. Ethyl lactate also shows a substantial viscosity lowering effect on acids such as erucic acid. However, since erucic acid becomes a solid again in ethyl lactate at room temperature this is less preferred for use in bioremediation.

## Claims

1. A method for bioremediation of an environment that is contaminated with a halogen-containing compound comprising adding to the environment an amount of a composition comprising a) 10 to 90 wt.% of a C8-C22 fatty acid, a salt or a C1-C8 ester thereof, or a mixture thereof, and b) 10 to 90 wt.% of a C1-C8 ester of lactic acid, and reductively dehalogenating the halogen-containing compound in the environment to innocuous compounds.

2. The method according to claim 1 wherein the composition comprises a) 25 to 75 wt.% of a C8-C22 fatty acid, a C1-C8 ester thereof, or a mixture thereof, and b) 25 to 75 wt.% of a C1-C8 ester of lactic acid.

3. The method according to claim 1 or 2 wherein the fatty acid is a saturated fatty acid.

4. The method according to any one of claims 1-3 wherein the composition further comprises up to 25 wt.% of a surfactant.

5. The method according to claim 4 wherein the surfactant is a polyoxyethylene derivative.

6. The method according to any one of claims 1-5 wherein the composition comprises ethyl lactate and a fatty acid selected from soy been fatty acid, rapeseed fatty acid, coconut fatty acid, palm kernal fatty acid, tallow fatty acid, sunflower seed oil, and a mixture thereof.

7. The method according to any one of claims 1-6 wherein the environment that is contaminated is groundwater.
